# EUROPÄISCHE PATENTANMELDUNG

(11) **EP 1 747 962 A2**
(43) Veröffentlichungstag der Anmeldung: **31.01.2007**
(21) Anmeldenummer: 06405323.4
(22) Anmeldetag: 27.07.2006
(51) Int. Cl.: B62B 5/02

(54) **Stapelkarre**

(30) Priorität: 29.07.2005 CH 12682005
(71) Anmelder: Zindel, Jacques, 8805 Richterswil (CH)
(72) Erfinder: Zindel, Jacques, 8805 Richterswil (CH)

(57) **Zusammenfassung**

Es wird eine Karre (100) vorgeschlagen, mit der es möglich ist, Lasten über Treppen (Stufen) zu transportieren ohne dazu die Räder als Fortbewegungselemente zu benötigen und ohne unmittelbare Gleitreibung zwischen Fahrgestellteilen und Stufen zu erzeugen. Passive Riementriebe schützen empfindliche Stufen vor Beschädigungen und verhindern, dass an Fahrgestellteilen Verschleiss durch die Einwirkung scharfkantiger Stufen ensteht. Durch eine vordefinierte, von Stufen unabhängige Reibung des Riementriebes wird der Kraftaufwand um Lasten treppenabwärts zu transportieren erheblich reduziert und damit für den Karrenführer ungefährlich.

## Beschreibung

Die Erfindung bezieht sich auf eine Karre mit mindestens zwei achsfluchtenden Rädern, dessen Konstruktion es ermöglicht, Lasten auch über Treppen (Stufen) zu transportieren. Die Last wird hierfür nicht von den Rädern, sondern von Elementen des Fahrgestelles getragen.

Bei bekannten Karren sind für den Transport über Treppen (Stufen), am Fahrgestell Kufen angebracht, (in der Regel zwei), deren Länge in Transportrichtung so dimensioniert ist, dass mindestens zwei Stufen gleichzeitig die Kufen unterstützen. Diese Karren wirken in diesem Fall gleitend als Transportschlitten. Nachdem Treppen einerseits oft aus harten Materialien wie beispielsweise Stahl oder Beton mit scharfen Kanten beschaffen sind, entstehen an den Kufen Beschädigungen und starker Verschleiss. Andererseits bestehen Treppen auch aus druckempfindlichem Material wie beispielsweise Holz oder sind mit wollartigem Teppichmaterial überzogen; an solchen Treppen entstehen durch hohe Flächenpressung und durch das Gleiten der Kufen Beschädigungen, insbesondere dann, wenn die Kufenoberfläche zuvor von harten Treppenmaterialien aufgerissen wurden. Hinzu kommt, dass bei bekannten Lösungen die Kufenmaterialien aus verschleissfesten Kunstoffen mit niedrigem Gleitreibungskoeffizienten bestehen. Werden grosse Lasten, welche in den Spezifikationen als zulässig ausgewiesen sind auch treppabwärts geführt, reicht die menschliche Kraft nicht mehr aus, um die Karre, welche jetzt als Schlitten wirkt, am unkontrollierbaren, für den Karrenführer oder Dritte gefährlichen Abwärtsgleiten zu hindern.

Die erfindungsgemässe Karre basiert auf einer Lösung, welche an Stelle der bei bekannten Karren verwendeten Kufe, passivem Riementrieb vergleichbares System mit endlosen Riemen verwendet. Die Länge der Riementrume entsprechen der Länge der bekannten Kufen. Gleitreibung zwischen diesen Riemen und Stufen kann nicht auftreten, weil die Riemen stufenseitig Noppen oder Zähne aufweisen und folglich zwischen Treppe (Stufen) und Riemen eine formschlüssige Verbindung entsteht. Die Riemen werden dadurch nicht relativ zur jeweils kraftübertragenden Stufe bewegt, sondern umlaufend gegen die Transportrichtung relativ zum Karren. Die treppenseitigen Riementrume werden karrenseitig durch je eine Tragschiene abgestützt damit dieses nicht von den kraftübertragenden Stufen bzw. der Karren-Last durchgedrückt wird. Die zwischen Riemen und Tragschienen wirkende Gleitreibung ist durch Wahl der Materialpaarung derart definiert, dass bei maximal zulässiger Last die Karre durch dessen Führer mit voraussetzbarer Muskelkraft am unkontrollierbaren Abwärtsgleiten gehindert werden kann.

Einzelheiten der Erfindung ergeben sich aus der nachstehenden Beschreibung in Verbindung mit Zeichnungen und den einzelnen Patentansprüchen. Es zeigt:
- **Fig. 1**: als zweifache isometrische Darstellung die Karre als Gesamtes
- **Fig. 2**: als isometrische Darstellung mit vergrössert dargestellten Einzelheiten die passiven Riementriebe
- **Fig. 3**: als Schnittzeichnung mit vergrösserter Einzelheit weitere Ausführungen des passiven Riementriebes
- **Fig. 4**: als Prinzipdarstellung den Transport des Karrens über Stufen einer Treppe

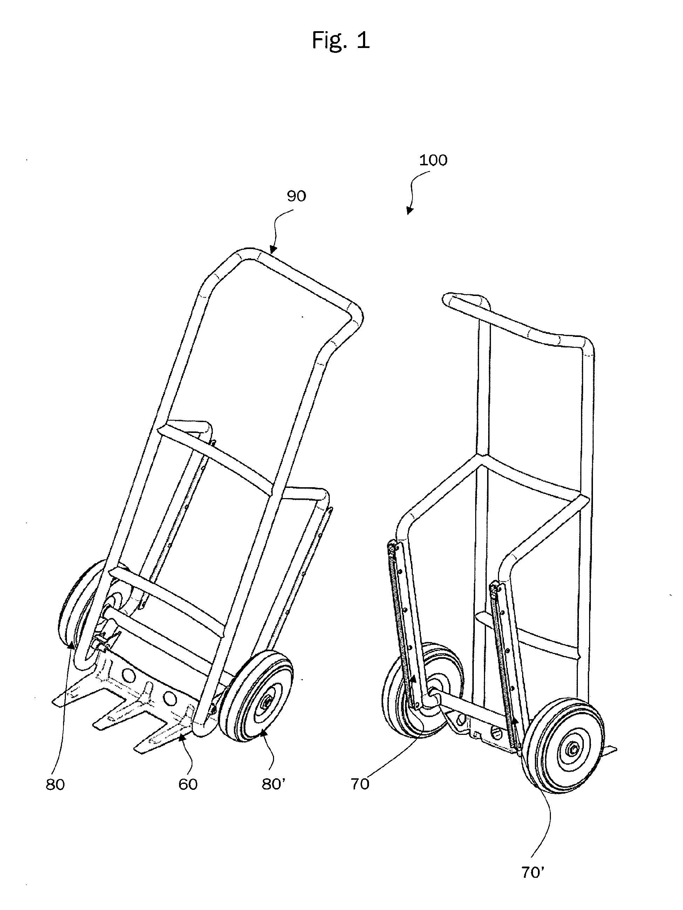

Fig. 1 zeigt in prinzipieller Darstellung eine mit 100 bezeichneten Karre besteht aus:
- einem Fahrgestell 90
- zwei achsfluchtende Räder 80; 80'
- Passiven Riementrieben 70 ; 70'
- Einer Lastgabel 60
Mit dieser Darstellung wird verdeutlicht, wie anstelle von Kufen, passive Riementriebe 70;70' verwendet werden. Erfindungsrelevant sind im Folgenden ausschliesslich die Ausführungen im Zusammenhang mit dem die (bei bekannten Karren eingesetzten) Kufen ersetzenden Riementriebe 70;70'. Auf nähere Erläuterungen der die Erfindung nicht betreffenden Karrenteile wird daher verzichtet.

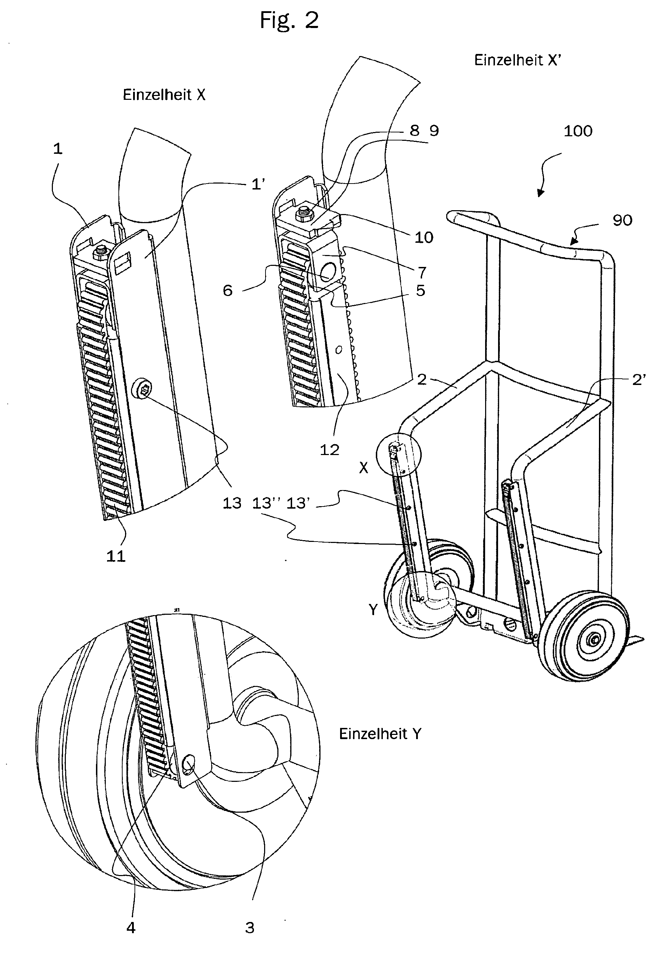

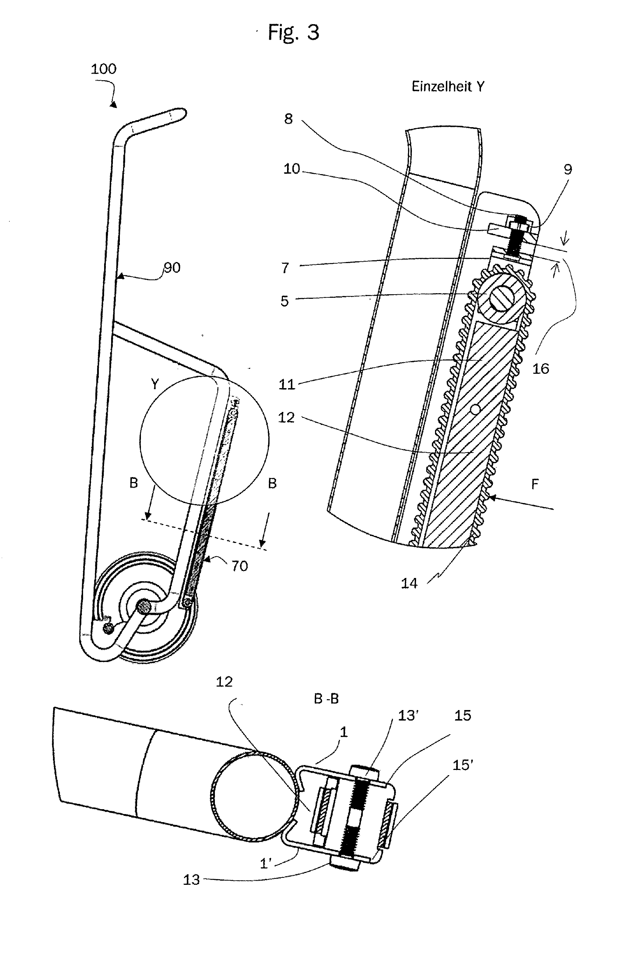

Fig. 2 verdeutlicht die Erfindung als Ausführungsbeispiel mit den passiven Riementrieben 70;70' des Karrens 100 ; diese beiden Riementriebe sind baugleich, weshalb sich die näheren Darlegungen jeweils auf einen einzelnen beschränkt. Am Gestell 90 sind Trägerelemente 1;1' befestigt - im Ausführungsbeispiel in nicht lösbarer Verbindung und parallel zu dem in etwa tangential zu den Rädern gerichteten Fahrgestellteilen 2;2'. In Einzelheit Y ist das Festlager des Riementriebes 70 dargestellt. Sie zeigt eine Achse 3, die in den Trägerelementen 1;1' in an dieser Stelle nicht näher beschieben Art so gelagert ist, dass sie achsial gesichert ist. Auf der Achse 3 ist eine Umlenkrolle 4 gleitend gelagert; ihre achsiale Lage wird durch die Trägerelemente 1;1' definiert. In Einzelheit X und - mit ausgeblendetem Trägerelement 1' - in X' ist die Spannrolle 5 dargestellt und diese ist gleitend auf Achse 6 gelagert. Im Spannbügel 7 ist Achse 6 lose gelagert. Die Trägerelemente 1;1' verhindern eine achsiales Verschieben der Achse 6. Durch Gewindebolzen 8, welcher mit Spannbügel 7 verbunden ist (in Fig. 3. dargelegt) sowie durch die Spannplatte 10, welche mit den Trägerelementen 1;1' formschlüssig gekoppelt ist, und eine für Gewindebolzen 8 notwendige Durchgangsbohrung aufweist, kann durch die Mutter 8, welche sich auf der Spannplatte 10 abstützt, der Riemen 11, im Ausführungsbeispiel als Zahnriemen dargestellt, gespannt werden. Zwischen der Umlenkrolle 3 und Spannrolle 5 ist eine (in Fig. 3 näher dargestellte) Stützschiene 12, vorzugsweise aus Kunststoff, befestigt. Beidseitig der Trägerelemente 1;1' verbinden gewindeschneidende Schrauben 13; 13'; 13 "die Stützschiene 12 mit den Trägerelemente 1; 1'. Inbezug auf die Laufrichtung der Riemen bilden dadurch die Trägerelemente 1;1' und Stützschiene 12 einen quasigeschlossenen, stabilen Körper.

Fig. 3 zeigt als Schnitt 90° zur Transportachse des Karrens 100 das Ausführungsbeispiel eines des Riementriebes 70'. Einzelheit Y zeigt, dass das dem Gestell 90 entferntere und auf den Treppen (Stufen) laufende Riementrum 14 auf der Stützschiene 12 aufliegt. Weiter erkennt man die Verbindung zwischen Gewindebolzen 8 und Spannbügel 7 , sowie die Abstützung der Mutter 9 auf Spannplatte 10. Damit ist dargelegt, dass durch Drehen der Mutter 9 indirekt die Spannrolle 5 so verschoben werden kann, dass Abstand 16 sich verringert, der Riemen 11 gespannt werden kann. Mit Schnitt B-B wird nochmals dargelegt, dass Stützelemente 1; 1' und Stützschiene 12 (nicht schraffiert) durch Eindrehen der Schrauben 13; 13' einen in Laufrichtung des Riemens 11 bezogen, geschlossenen, stabilen Körper bilden. Dieser verdeutlicht auch, dass die von Karren und Last wirkende Kraft F nicht von den Schrauben 13; 13' sondern den Stützflächen 15; 15' aufgenommen werden.

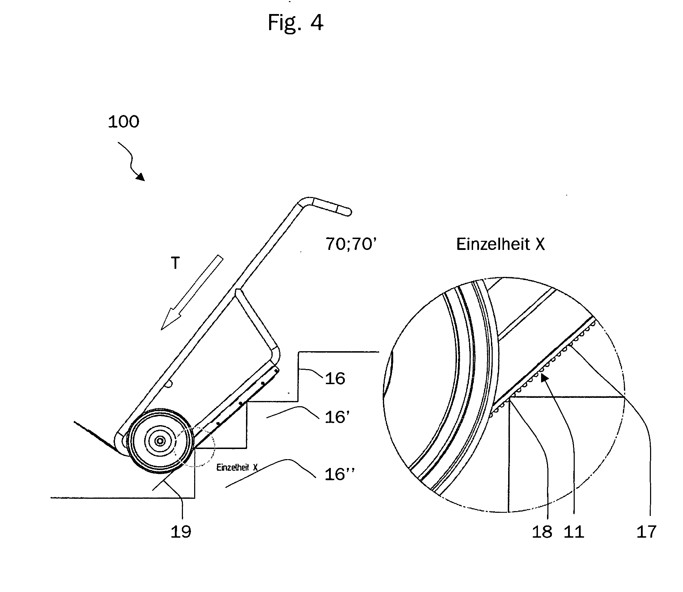

Fig. 4 erklärt die Funktionsweise der Karre in Bewegungsrichtung T.
Der Karren 100 wird auf den Stufen 16;16;16" durch die passiven Riementriebe 70;70' abgestützt. Deren Riemenzähne (oder Noppen) 17 gehen mit den Stufenkanten 18 formschlüssige Verbindungen ein, was zur Riemenbewegung in Richtung -T führt. Die Rad-Tangente 19 ist im Ausführungsbeispiel gegenüber dem Riemens 11 um eine Distanz" die der elastischen Verformung der Räder entspricht, zur Treppe hin verschoben dargestellt.

## Patentansprüche

1. Karre (100) **dadurch gekennzeichnet, dass** dessen Fahrgestell (90) mit passiven Riementrieben (70;70') für Treppenfahrten [Stufenfahrten] ausgestattet ist.

2. Karre nach Anspruch 1 **dadurch gekennzeichnet, dass** die Riementriebe (70;70') mit Riemen (11) ausgelegt sind, die treppenseitig über Noppen oder Zähne (17) verfügen.

3. Riemntrieb nach Anspruch 1 **dadurch gekennzeichnet, dass** die Riementrume treppenseitig durch Stützschienen (12) unterstütz werden.
